# EUROPÄISCHE PATENTSCHRIFT

(11) **EP 0 420 349 B1**
(45) Veröffentlichungstag und Bekanntmachung des Hinweises auf die Patenterteilung: **08.12.1993**
(21) Anmeldenummer: 90202541.0
(22) Anmeldetag: 21.09.1990
(51) Int. Cl.: A01D 25/04, A01D 21/02

(54) **Maschine zum Roden von Zwiebel-, Knollen- oder Wurzelgewächsen**
Machine for harvesting onions, bulbous or tuberous plants
Machine pour la récolte d'oignons, de végétaux bulbeux ou tubéreux

(30) Priorität: 22.09.1989 NL 8902379
(43) Veröffentlichungstag der Anmeldung: 03.04.1991
(73) Patentinhaber: Hack, Bernardus Antonius Maria, NL-4756 SE Kruisland (NL); Hack, Wilhelmus Cornelis Elizabeth, NL-4756 SE Kruisland (NL)
(72) Erfinder: Hack, Bernardus Antonius Maria, NL-4756 SE Kruisland (NL); Hack, Wilhelmus Cornelis Elizabeth, NL-4756 SE Kruisland (NL)
(74) Vertreter: Boelsma, Gerben Harm, Ir.

(56) Entgegenhaltungen:
- BE-A- 675 251
- BE-A- 736 630
- NL-A- 7 607 358

## Beschreibung

Die Erfindung bezieht sich auf eine Maschine zum Roden von Zwiebel-, Knollen- oder Wurzelgewächsen, insbesondere von Zuckerrüben, bestehend aus eines mit Laufrädern versehenen Gestell mit einer Anzahl von quer zur Laufrichtung nebeneinander angeordneten Rodescharen, die je aus zwei zusammenarbeitenden, in der Laufrichtung der Maschine zueinander divergierenden und hin- und herbeweglichen, untereinander in der Phase verschobenen Rodeklingen bestehen, welche Rodeklingen je am unteren Ende eines um eine etwa waagerechte Querwelle gelenkig montierten Tragbeins befestigt sind, wobei die Querwellen der zu einer selben Rodeschar gehörenden Tragbeine jeweils zu eines Tragrahmen gehören, der um eine etwa waagerechte, in der Laufrichtung der Maschine verlaufende Achse schwenkbar am Maschinengestell montiert ist, und wobei jedes der Beine über eine Treibstange die in einem im Abstand von der Achse liegenden Punkt angreift, mit einer waagerecht und quer zur Laufrichtung im Gestell gelagerten Antriebswelle gekuppelt ist.

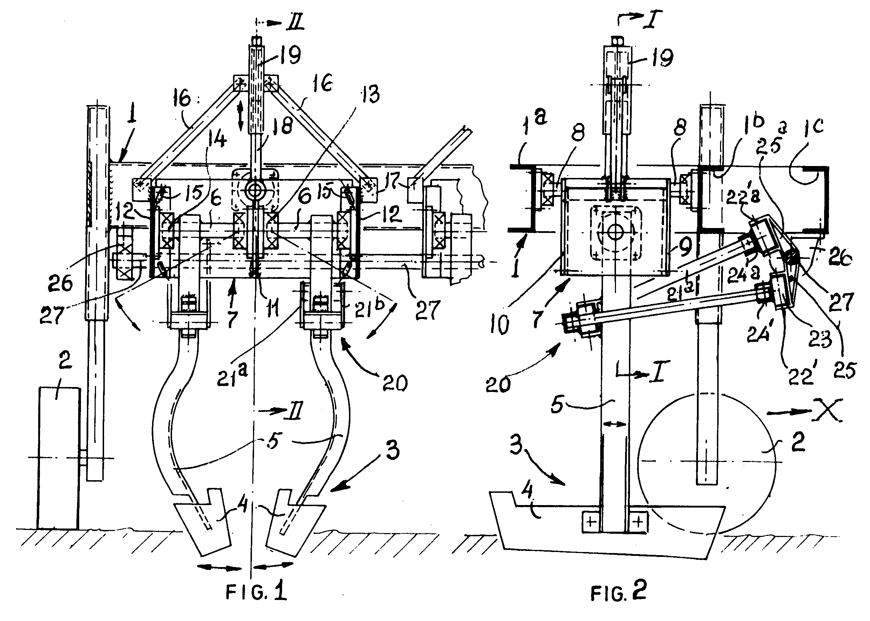

Eine derartige Maschine ist bekannt aus NL-A-7607358 (Ausführung nach Fig. 4 und 5).

Bei dieser bekannten Ausführung können die Rodescharen zwar, durch Schwenken der betreffenden Tragrahmen um die in der Laufrichtung verlaufenden Achsen, seitlichnachgeben aber ein Verstellen des Abstandes zwischen den Rodenklingen einer Schar ist nicht möglich. Bei der bekannten Maschine sind die Treibstangen jeder Rodeschar mittels einer auf dem betreffenden Tragrahmen montierten und mit diesem mit Schwenkenden Riemenscheibe mit zugehörigem Treibriemen mit der Antriebswelle gekuppelt.

Ein Nachteil dieser bekannten Ausführung ist, dass der Zugzahl der zusammenarbeitenden Rodeklingen (= die Anzahl Hin- und Herbewegungen) durch die universel bewegliche Verbindungen und die nicht immer miteinander übereinstimmenden Lagen der zweiten Querwellen und der Gelenkachsen in den zwischenliegenden Gelenkpunkten der Tragbeine beschränkt ist. Mit der vorliegenden Erfindung wird beabsichtigt eine verbesserte Maschine dieser Art zu schaffen und dabei insbesondere die Bedingungen für einen Störungsfreien Betreib der Maschine bei Schlagzahlen über 500 Schräge pro Minute zu realisieren.

Erfindungsgemäss wird dieser Zweck dadurch erreicht, daß die Querwellen in selbst-einstellbare Stützlagern im Tragrahmen gelagert sind, in der Weise, dass sich die Lage der Querwellen - in der Vertikalebene quer zur Laufrichtung der Maschine betrachtet - durch Schwenken um den Mittelpunkt des betreffenden Stützlagers ändern kann um die Lage der Rodeklingen und damit der Abstand zwischen den zusammenarbeitenden Rodeklingen verstellen zu können, wobei die Treibstangen für die Hin- und Herbewegung der Rodeklingen mit ihren von den Tragbeinen abgekehrten Enden mit je einem Kurbelarm gelenkig verbunden sind, der auf der um einen beschränkten Winkel hin und her schwenk-baren Antriebswelle sitzt, wobei die Gelenkpunkte an beiden Enden der Treibstangen in Form von in zwei untereinander senkrechten Richtungen wirksamen Schwingungsdämpfern ausgeführt sind.

Infolge der erfindungsgemässe Massnahme sind die universell beweglichen Verbindungen zwischen den ersten Querwellen, wie auch die verbindende Antriebswelle dazwischen weggefallen und führen diese ersten Querwellen nur noch eine Hin- und Herbewegung über einen kleinen Winkel aus. Durch die Anwendung der speziellen Swingungsdämpfer in den Gelenkpunkten der unmittelbar auf die Antriebswelle angreifenden Treibstangen, können die Gelenkverbindungen sowohl in der Horizontalebene, wie auch in der Vertikalebene nachgeben. Infolgedessen können die beiden Scharbeine und somit die betreffenden Rodeklingen ohne Bedenken in einem grösseren oder kleineren Abstand voneinander angeordnet werden ohne dass dies zu unerwünschten, zwangsläufigen Torsionsbewegungen der Treibstangen führt.

Die Schwingungsdämpfer bewirken dabei, dass der Tragrahmen in unbelastetem Zustand jeweils zu seiner Mittel- oder Ruhelage zuruckkehrt. Weitere Merkmale und Einzelheiten der Erfindung werden unten an Hand der Zeichnung mit eines Ausführungsbeispiel näher erläutert.

Fig. 1 ist eine Vorderansicht, teilweise im Schnitt nach der Linie I-I in Fig. 2, der Rodemaschine nach der Erfindung und

Fig. 2 zeigt einen Querschnitt dieser Maschine, nach der Linie II-II in Fig. 1.

Die in der Zeichnung dargestellte Rodemaschine hat ein langgestrecktes Gestell 1, das sich quer zur Laufrichtung X (Fig. 2) der Maschine erstreckt und an den beiden Enden durch in der Höherichtung verstellbar an ihm befestigten Laufräder 2 getragen wird. In Fig. 1 ist nur ein Endabschnitt der Rodemaschine gezeigt und zwar das Ende, das sich, in der Laufrichtung X gesehen, an der rechten Seite befindet.

Die Rodemaschine ist dazu bestimmt, mittels einer in der Zeichnung nicht näher veranschaulichten, am Gestell 1 vorzusehenden Kuppelanordnung, mit einem Wagen zum Aufnehmen, Reinigen und Sammeln der aufgegrabenen Rüben gekuppelt zu werden.

Am Gestell 1 ist eine Anzahl von in Querrichtung auf eine Linie und untereinander im Abstand angeordneten Rodescharen 3 vorgesehen. Die Zeichnung zeigt eine dieser Rodescharen, und zwar diejenige Rodeschar, die sich an der rechten Seite der maschine befindet. Die übrigen Rodescharen - die Rodemaschine enthält zum beispiel insgesamt sechs Rodescharen - sind dergleichen Konstruktion und werden aus diesem Grund nicht gezeigt. Jede Rodeschar 3 besteht aus zwei zusammenarbeitenden Scharklingen 4, die jede am unteren Ende eines Tragbeins 5 befestigt sind, dessen obere Ende auf einer Welle 6 sitzt. Die zu den Rodeklingen 4 mit ihren Tragbeinen 5 dergleichen Rodeschar 3 gehörenden Wellen 6 sind in einem etwa rechteckigen Tragrahmen 7 gelagert, der mit zwei bezw. nach vorne und nach hinten ragenden, in der Mittellängsebene des Tragrahmens liegenden Wellenzapfen 8 um eine etwa waagerechte Achse schwenkbar zwischen zwei in Querrichtung verlaufenden Gestellträgern 1a und 1b montiert ist.

Der Tragrahmen 7 besteht aus einer vorderen und einer hinteren, in Querrichtung verlaufenden aufstehenden Rahmenwand 9 bezw. 10, von denen die Wellenzapfen 8 ausragen, sowie einer mittleren Wand 11 und zwei Seitenwänden 12. An beiden Seiten der mittleren Wand 11 ist ein selbst-einstellbares Flanschenlager 13 befestigt, während die Seitenwände 12 an der Innenseite mit "normalen" Flanschenlagern 14 versehen sind. Die beiden Seitenwände 12 sind mit Stift-Schlitzverbindungen 15 zwischen den vorderen und hinteren Wänden 9 und 10 befestigt, und zwar in der Weise, dass die Seitenwände 12 aus ihren senkrechten Mittellage parallel zu der einen oder anderen Seite gekippt werden können. Diese Kippbewegung ist dabei eine kreisbogenförmige Bewegung, deren Mittelpunkt durch dasjenige desbetreffenden Flanschenlagers 13 gebildet wird. Die Schlitze der Stift-Dchlitzverbindungen 15 verlaufen dazu gemäss einem Kreisbogen, dessen Krümmungsmittelpunkt mit jenem Mittelpunkt zusammenfält. Die genannte Kippbewegung kann für beide Seitenwände 12 zugleich stattfinden mit Hilfe eines Systems mit zwei gleichen Gelenkstangen 16, die einerseits nahe am oberen Ende der betreffenden Wände 12 (bei 17) angelenkt sind und andererseits an beiden Seiten einer über eine senkrechte Führungsstange 18 auf und abbewegbaren Stellbüchse 19 angelenkt sind. Indem die Stellbüchse 19 nach oben bezw. nach unten verschoben wird, findet eine für beide Tragbeine 5 gleiche Schwenkbewegung um das Mittelpunkt der betreffenden selbst-einstellenden Flanschenlager 13 nach aussen bezw. nach innen statt, wodurch der Abstand zwischen den Rodeklingen 4 nach Wunsch vergrössert bezw. verkleinert wird.

An jedem Tragbeim 5 ist bei 20 eine spezielle Angriffsstelle für eine doppelarmige Treibstange 21 gebildet. Die Angriffsstelle 20 besteht im gezeigten Ausführungsbeispiel aus zwei angeschweissten, etwa senkrecht übereinander liegenden Laschen 22, welche dazu bestimmt sind zwischen ihnen den einen, aufstehenden büchsenförmigen Teil 23 eines Verbund-Schwingungsdämpfer aufzunehmen, dessen anderer, liegender büchsenförmiger Teil mit 24 bezeichnet ist. Derartige Schwingungsdämpfer sind an sich bekannt. Die untereinander festverbundenen Büchsen 23 und 24 sind je mit einem Kern aus Schwingungen dämpfendem Material, zum Beispiel Gummi, versehen. Die eine Buchse 23 ist mittels eines oder mehrerer durch seinen Gummi-Kern hindurchragenden Bolzen(s) zwischen den beiden Montagelaschen 22 befestigt, während die beiden Arme 21a und 21b der Treibstange 21 mit ihren betreffenden Enden mittels eines oder mehrerer durch den Gummi-Kern der Buchse 24 hindurchragenden Bolzen(s) an den betreffenden Schwinungsdämpfer befestigt sind. Die vom Tragbeim 5 abgewändeten Enden der Arme 21a und 21b jeder Treibstange 21 sind in ähnlicher Weise befestigt am einen buchsenförmigen Teil 24' eines ähnlichen Schwingungsdämpfers, dessen anderer, aufstehender buchsenförmiger Teil 23' befestigt ist an zwei ausragenden Lachsen 22' eines Armes 25 bezw. 25', der auf einer im Stützlager 26 an der Unterseite eines dritten Gestellträgers 1c gelagerten horizontalen Antriebswelle 27 sitzt. Die beiden Arme 25 und 25a, die mit den Treibstangen 21 bezw. 21a für die zu einem selben Paar gehörenden Tragbeine 25 zusammenarbeiten, nehmen unterschiedliche Winkellagen mit Bezug auf die Antriebswelle 26 ein, wodurch die über die Treibstangen 21 bezw. 21a an den betreffenden Tragbeinen 5 mitgeteilten Hin- und Herbewegungen (um die Querwellen 6) in der Phase verschoben sind. Der Triebwelle 27 wird in einer in der Zeichnung nicht veranschaulichten Weise, zum Beispiel über einen Kurbelarm, die mit einem Exzenter auf der Welle eines Antriebsmotors sitzt, eine Schwenkbewegung mitgeteilt über einen derart beschränkten Winkel, dass die Rodeklingen 4 in einer Hin- und Herbewegung durch den Boden versetzt werden, derer Zug in der Grossenordnung von etwa 4 cm liegt.

Es ist klar, dass dank der speziellen Schwingungsdämpfer in dem Gelenkpunkten 20 und 20a bezw. 20a' eine weitgehende Flexibilität mit Bezug auf das Nachgeben bei Schwenkbewegungen des Tragrahmens 7 um die Wellen 8 und bei den beim Nachstellen des Rodeklingenabstandes stattfindenden, nach aussen oder nach innen gerichtete Schwenkbewegungen der Tragbeine 5 entstanden ist.

Infolgedessen können die Rodeklingen in der erfindungsgemässen Maschine ohne Bedenken 100 Züge oder mehr pro Minute ausführen, was die Rodegeschwindigkeit erheblich erhöht und das pro Zeiteinheit aus dem Boden zu hebende Gewicht an Rüben dementsprechend vergrössert.

Zum übrigen entspricht die Wirkung der obenbeschriebenen Maschine derjenigen der bekannten Maschine.

## Patentansprüche

1. Maschine zum Roden von Zwiebel-, Knollen- oder Wurzelgewächsen, insbesondere von Zuckerrüben, bestehend aus einem mit Laufrädern (2) versehenen Gestell (1) mit einer Anzahl von quer zur Laufrichtung (X) neben-einander angeordneten Rodescharen (3), die je aus zwei zusammenarbeiten-den, in der Laufrichtung der Maschine zueinander divergierenden und hin- und herbeweglichen, untereinander in der Phase verschobenen Rodeklingen (4) bestehen, welche Rodeklingen (4) je am unteren Ende eines um eine etwa waagerechte Querwelle (6) gelenkig montierten Tragbeins (5) befestigt sind, wobei die Querwellen der zu einer selben Rodeschar (3) gehörenden Tragbeine (5) jeweils zu einem Tragrahmen (7) gehören, der um eine etwa waagerechte, in der Laufrichtung der Maschine verlaufende Achse (8) schwenkbar am Maschinengestell (1) montiert ist, und wobei jedes der Beine über eine Treibstange (21, 21a), die in einem im Abstand von der Achse (8) liegenden Punkt (20) angreift, mit einer waagerecht und quer zur Laufrichtung im Gestell gelagerten Antriebswelle (27) gekuppelt ist, dadurch gekennzeichnet, daß die Querwellen (6) in selbst-einstellbaren Stützlagern im Tragrahmen (7) gelagert sind, in der Weise, dass sich die Lage der Querwellen - in der Vertikalebene quer zur Laufrichtung der Maschine betrachtet - durch Schwenken um den Mittelpunkt des betreffenden Stutzlagers ändern kann um die Lage der Rodeklingen (4) und damit der Abstand zwischen den zusammenarbeitenden Rodeklingen verstellen zu können, wobei die Treibstangen (21, 21a) für die Hin- und Herbewegung der Rodeklingen (4) mit ihren von den Tragbeinen (5) abgekehrten Enden mit je eines Kurbelarm (25, 25a) gelenkig verbunden sind, der auf der um einen beschränken Winkel hin und her schwenkbaren Antriebswelle (27) sitzt, wobei die Gelenkpunkte (20; 20a, 20a') an beiden Enden der Treibstangen (21, 21a) in Form von in zwei untereinander senkrechten Richtungen wirksamen Schwingungsdämpfern ausgeführt sind.

2. Maschine nach Anspruch 1, dadurch gekennzeichnet, dass der Tragrahmen (7) aus einer vorderen (9) und einer hinteren aufstehender Wand (10), einer in einer Ebene durch die Laufrichtug der Maschine liegenden mittleren Wand (11) und zwei nach aussen bezw. nach innen kippbaren Seiten-wänden (12) besteht, wobei an beiden Seiten der die vordere und die hintere Wand (9, 10) verbindenden mittleren Wand (11) die selbst-einstellbaren Stützlager (13) für einem Ende der beiden Querwellen (6) vorgesehen sind, während die um das Mittelpunkt dieser selbst-einstellbaren Lager (13) kippbaren Seitenwände (12) die "normalen" Stützlager (14) für die anderen Enden der Querwellen (6) tragen.

## Claims

1. A machine for lifting root crops, bulbous or tuberous plants, comprising a wheeled (2) frame (1) with a number of lifting pincers (3) positioned side by side transversely to the travelling direction (X), each of said pincers consisting of two cooperating lifting shares (4), which are mounted for a reciprocating movement and which diverge in the travelling direction, while being mutually out of phase, said lifting shares (4) being each provided at the lower end of a supporting leg (5) which is pivotally mounted about a substantially horizontal transverse shaft (6), the transverse shafts (6) of the support legs (5) of each lifting pincer (3) being associated to a support frame (7) that is mounted to the machine frame (1) for a swinging movement about a substantially horizontal axis (8) extending in the travelling direction, each of said legs being connected-through a connecting rod (21, 21a) which engages said leg at a point (20) positioned at a distance from said axis (8) - to a horizontal driving shaft (27) journalled in said machine frame and extending transversely to the travelling direction, characterized in that the transverse shafts (6) are journalled in said support frames through self-adjustable bearings, in such a way that the position of the transverse shafts may - as seen in a vertical plane at right angles to the travelling direction of the machine - vary by swinging about the centre of the respective bearings so as to adjust the position of the lifting shares (4) and thereby the spacing between the cooperating lifting shares, the connecting rods (21, 21a) for the reciprocating movement of the lifting shares (4) having their ends turned away from the supporting legs (5) pivotally connected to a crank arm (25, 25a) provided on the driving shaft (27), the latter being rotatably movable back and forth through a limited angle, and wherein said pivots (20; 20a, 20a') at the two ends of the connecting rods (21, 21a) are in the form of silent blocks that are effective in two mutually perpendicular directions.

2. A machine according to claim 1, characterized in that the support frame (7) comprises a front upstanding wall (9) and a rear upstanding wall (10), a central wall (11) positioned in a plane through the travelling direction of the machine and two outwardly (or inwardly respectively) tiltable side-walls (12), wherein the self-adjustable bearings (13) for one end of each of said two transverse shafts (6) are mounted at the two sides of the central wall (11) that interconnects said front and rear walls (9,10), whereas the "normal" bearings (14) for the other ends of said transverse shafts (6) are carried by the side-walls (12) which may tilt about the centre of said self-adjustable bearings (13).

## Revendications

1. Machine pour l'arrachage d'oignons, de bulbes ou de végétaux tubéreux, notamment de betteraves sucrières, constituée d'un support (1) muni de roues porteuses (2) et comportant un nombre de tenailles d'arrachage (3) qui sont montées les unes à côtés des autres transversalement à la direction de marche (X) et qui sont constituées respectivement de deux lames d'arrachage (4) accouplées divergant dans la direction de marche de la machine l'une de l'autre, mobiles dans les deux sens, et décalées l'une de l'autre en phase, lames d'arrachage (4) qui sont fixees à l'extrémité inférieure d'un montant porteur (5) monté articulé autour d'un arbre transversal (6) horizontal, les arbres transversaux des montants porteurs (5) qui appartiennent à une même tenaille d'arrachage (3), appartenant à un cadre porteur (7), qui est monté sur le support (1) de la machine, en pouvant pivoter autour d'un axe (8) horizontal s'étendant dans la direction de marche de la machine, chacun des montants étant couplés, par l'intermédiaire d'une bielle (21, 21a) qui est appliquée en un point (20) situé à distance de l'axe (8), à un arbre de transmission (27) horizontal, logé, dans le support, transversalement à la direction de marche caractérisée en ce que les arbres transversaux (6) sont logés dans le cadre porteur (7), dans des paliers d'appui auto-réglables, de telle sorte que la position des arbres transversaux - considérée dans le plan vertical transversalement à la direction de marche de la machine - peut se modifier par pivotement autour du centre du palier d'appui concerné, pour que la position des lames d'arrachage (4) et la distance entre les lames d'arrachage accouplées puissent être réglées, les bielles (21, 21a) pour le mouvement dans les deux sens des lames d'arrachage (4) étant reliées en étant articulées, par leurs extrémités opposées aux montants porteurs (5), à un bras de manivelle (25, 25a) qui est monté sur l'arbre de transmission (27) de manière à pouvoir pivoter dans les deux sens d'un angle limité, les points d'articulation (20; 20a, 20a') étant réalisés aux deux extrémités de la bielle (21, 21a) sous la forme d'un oscillateur de vibration agissant dans deux directions perpendiculaires l'une par rapport à l'autre.

2. Machine suivant la rwendication 1, caractérisée en ce que le cadre porteur (7) est composé d'une paroi verticale avant (9) et d'une paroi verticale arrière (10), d'une paroi centrale (11) montée dans un plan dirigé dans le sens de celui de la direction de la machine, et de deux parois laterales (12) pouvant basculer vers l'intérieur au vers l'extérieur, les paliers d'appui autoréglables (13) pour une extrémité des deux arbres transversaux (6) étant prévus des deux côtés de la paroi centrale (11) reliée aux parois avant et arrière (9, 10), alors que les parois latérales (12) pouvant basculer autour du centre de ce palier d'appui autoréglable (13) porte les paliers d'appui "normaux" (14) pour les autres extrémités des arbres transversaux (6).
